Europäisches Patentamt

European Patent Office

Office européen des brevets

(19)

(11) Publication number: **0 070 545**
A2

(12) **EUROPEAN PATENT APPLICATION**

(21) Application number: **82106461.5**

(22) Date of filing: **17.07.82**

(51) Int. Cl.³: **F 24 J 3/04,** F 02 G 5/04,
F 24 D 11/02

(30) Priority: **21.07.81 IT 2304881**

(43) Date of publication of application: **26.01.83**
**Bulletin 83/4**

(84) Designated Contracting States: **CH DE GB LI NL SE**

(71) Applicant: **Pagliarani, Giorgio, Via Cecchi, 7,
I-47037 Rimini (Forli) (IT)**

(72) Inventor: **Pagliarani, Giorgio, Via Cecchi, 7,
I-47037 Rimini (Forli) (IT)**

(74) Representative: **Dr. Ing. A. Racheli & C., Viale San
Michele del Carso, 4, I-20144 Milano (IT)**

(54) **Device for producing electric energy and heat.**

(57) This invention is referred to a device comprising a generator unit (40) where air used as a coolant for the above mentioned unit is used to feed a heat pump (37) whose compressor (14) is operated by the electrical current produced by said generator (40). A preferred solution would be to connect a water battery (17) to the heat pump (37), before the evaporator (16), in order to diminish the temperature amplitudes of heat pump feeding air. With this device it is possible to operate the heat pump with air having temperatures of minus 20°C.

Applicant:

GIORGIO PAGLIARANI

Via Cecchi, 7

47037 RIMINI (Forlì)

"DEVICE FOR PRODUCING ELECTRIC ENERGY AND HEAT"

The present invention is referred to self-contained devices for sanitary and/or air conditioning uses as well as for heating of blocks of buildings and/or sanitary water or swimming pools, sheds, and for providing electric energy for local use.

The increment of the scarce efficiency of the already existing devices of this type has been partially obtained by using the dissipated heat for heating purposes (i.e through a cogenerator).

Such devices are generally used for the heating of rooms and/or water for sanitary purposes. However, these pumps can operate within a restricted temperature range i.e. at our latitudes they only operate during the in-between seasons.

The principle aim of this invention is to obtain as much energy as possible per unit of fuel consumed by the motor of the generator thus minimizing the costs of produced energy.

Further, this invention will help to construct a heat pump which could function within a much wider temperature range than the ranges usually attained with the usual heat pumps i.e. between minus 20°C and plus 40°C.

Another object of the invention is to increase the heat pump C.O.P. (coefficience of performance).

The above mentioned objectives have been reached by designing this unit in a way permitting the air, which is used to cool the generator unit's motor, to be used as feeding air for the heat pump, operated by the same generator unit, after having increased its temperature making this air to pass through the generator unit. In this way the heat produced by said generator unit is regenerated, instead of being dissipated, as usually occurs.

Higher efficiency can be obtained by using a generator unit which regenerates heat, having the motor cooled by water and having heat regnerators within the cooling-oil circuit and around exhaust gas tubes thus enabling at the same time to obtain hot water.

An improved version of this invention forsees the use of exhaust gasses, as feeding air for the heat pump- which can be made to pass through a suitable gas-aer heat exchanger.

Another preferred solution, which this invention forsees, is the insertion, before the cooler, of a water battery whose function would be to diminish the temperature amplitudes of the feeding air, increasing or decreasing its temperature according to necessities.

It would be advisable to place the generator unit, and at least the cooler of the pump, inside an insulating casing open at both ends. Through one end air would enter and then, after cooling the exterior of the motor and having passed through the cooler, it would leave through the other end.

A further improvement would be to insert into the feeding air stream, and particularly into the insulating casing, at least the refrigerating compressor, any eventual fluid pumps, electrical motors, fans and any other mechanical devices, which by dissipating heat would contribute to the increase of the feeding air temperature.

An other improvement would be to start the heat pump compressor while still empty, or at least to start it in stages or in any other way so as to decrease the power input at the start off, thus eliminating the need of having a generator much more powerful than the compressor.

The invention will now be described according to the examples illustrated in the accompanyings drawings in which:

Fig. 1 illustrates the functioning of the device, keeping in mind the invention, during the summer cycle.

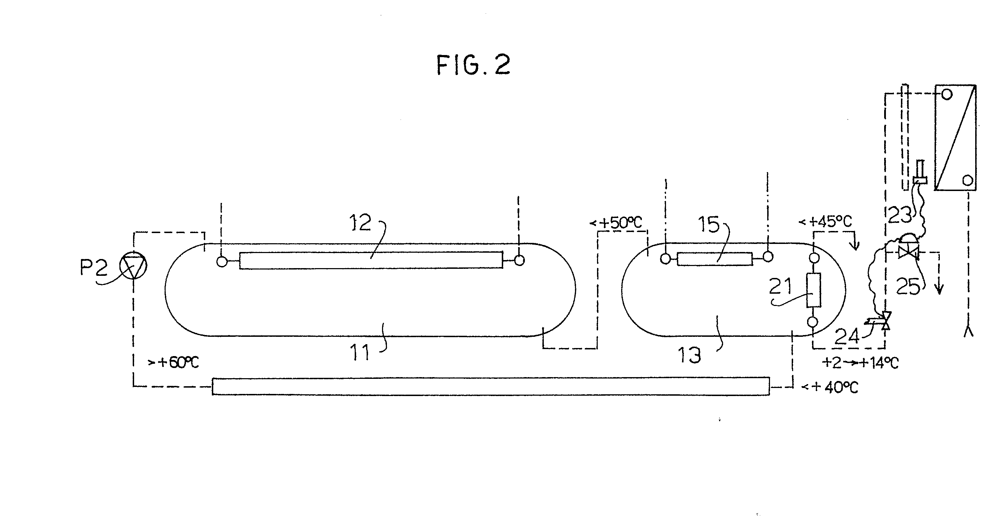

Fig. 2 illustrates the same device functioning during the winter cycle.

Fig. 3 illustrates a device which enables the heating of large
rooms where a high air flow is necessary.

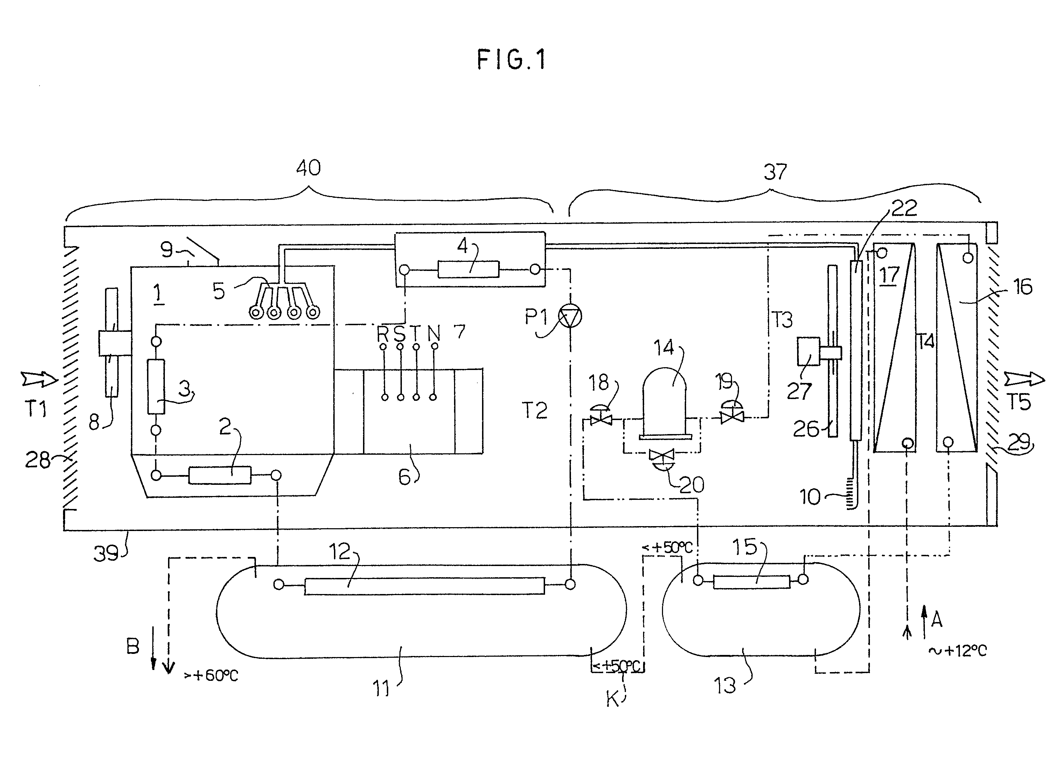

Referring to Fig. 1 it will be noted that the generator unit
has been indicated with 40. This unit is composed of a diesel
engine 1, an alternator 6 which produces a three-phase voltage
at the R S T N terminals 7. The motor 1 comprises a water
circuit 3 for cooling the diesel engine, this circuit being
also connected to the lubricating-oil heat abosrber 2 and to
the exhaust tube heat absorber 4.

The exhaust collector has been indicated with 5; 9 is the air
intake, 8 the fan and 10 the exhaust.

The generator unit 40 is housed inside an insulating casing 39
having the shape of a tunnel which has grids at both ends: 28
being the air intake grid and 29 being the air outflow grid.

The feeding air stream has been indicated with T1 and the outflowing air with T5. The T1 stream enters the system through grid
28, it then absorbs the remaining calories from the generator unit
and from the alternator 6, and usually dissipated by radiation
(to cool said generator unit). Thus, as stream T2, it licks the
compressor 14 and outflows as T3. In this region the residual
heat of exhaust gasses is regenerated through a suitable
exchanger 22, after the air flow T3 has passed through fan 26
which is driven by the motor 27. Further on the air stream
passes through the water battery 17 and finally, as stream T4,
passes through the evaporator 16 of the heat pump. This pump,
indicated with 37, should be contained inside the insulating casing 39, the condenser 15 being left outside.

In this way, the air passing through evaporator 16 is pre-heated
by the heat dissipaded by the generator unit and:
- it allows the heat pump operation, which has as heat source
  the external air, at much lower temperatures than the usual
  permissible ones;
- it increases the C.O.P. at medium/low temperatures;
- it eliminates the energy loss due to the defrosting periods;
- it reduces the down-times due to the defrosting periods;
- it allows the heat pump operation even when the electrical
  input does not suffice.

If the condenser 15 operates on water, as in Fig. 1, it will have
to be contained inside a water-filled insulating container 13.

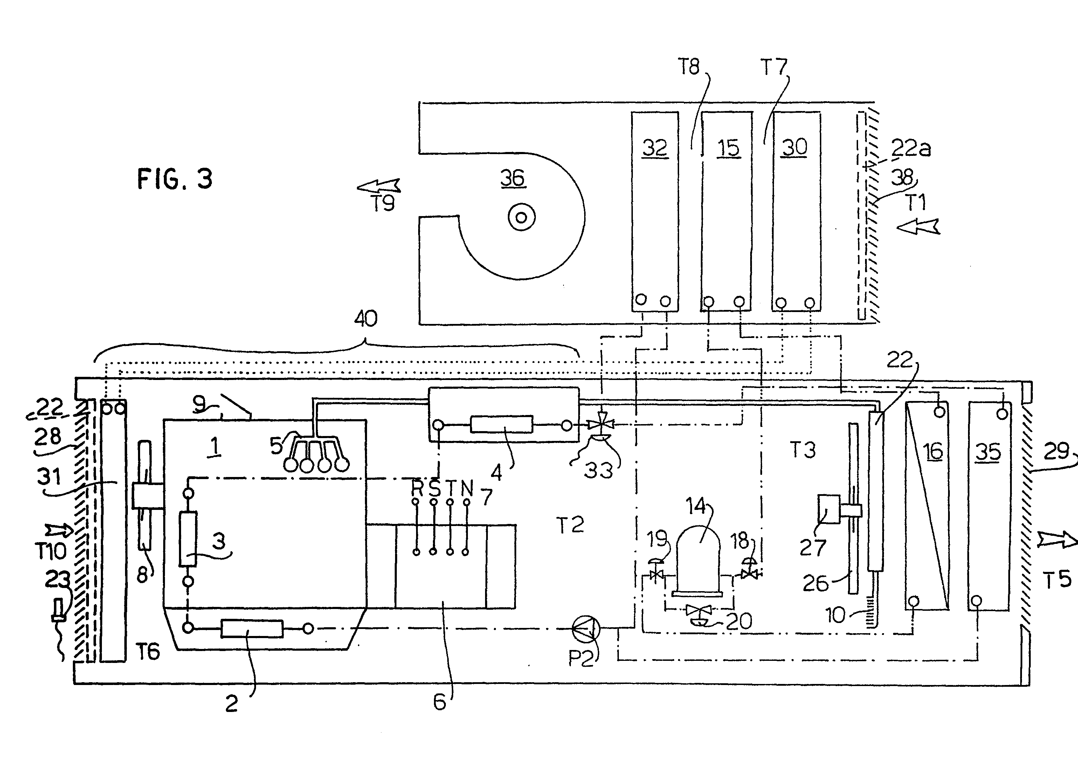

If the condenser 15 should operate on air, as in Fig. 3, it will
be contained inside a thermoventilating machine.

Just in front of the evaporator 16 a water battery 17 can be
placed thus producing hot water for sanitary purposes;this would
guarantee a pre-heating of the water and an eventual cooling
of the stream T3 which arrives at the evaporator 16 as flow T4,
should the temperature of T3 result excessive. On the other
hand, should the T3 stream have a temperature lower than that
of the sanitary water, the battery 17 will increase its
temperature to T4.

In the accompanying drawings a fan 26 is shown driven by
motor 27, which in turn is placed in front of the evaporator 16.

The air flow is guaranteed by the fan 8 of the motor 1 as well as by the fan 26. It is possible to include other fans along the entire insulating casing 39 thus providing the necessary air flow and speed.

In this example, the compressor 14 is provided with three electro-valves: 18 at the exit of the compressor, 19 at the entry and 20 is a by-pass valve which creates a short circuit of the compressor when valves 18 and 19 are closed.

The refrigerating gas circuit has been indicated in all the drawings with a double-dotted line, a dot-dashed line indicates the circuit which absorbes heat from the motor. Finally the sanitary water circuit is indicated with a dashed line.

In the summer cycle, see Fig. 1, the sanitary water enters as indicated by the arrow A, at 12°C and arriving at the water battery 17 it is pre-heated. Finally, it is stored in the heat container 13 where further heating takes place due to the cooler 15 of the heat pump. Having left this heat container, at about 50°C the water arrives in another heat container 11 which is fed by the heat exchanger 12. The water leaves the system, as shown at B, at temperatures superior than 60°C. The heat exchanger 12 is connected with the lubricating oil heat absorber 2, with the motor cooling circuit and with the exhaust heat absorber 4. The motion of the fluid is guaranteed by the fluid pump P1.

The refrigerating circuit, as known, goes from the compressor to the evaporator and finally returns to the compressor. In this device it is possible to short circuit the compressor thus making it possible to diminish the necessary start-off power.

About 30% of the energy obtained from the combustion of fuel within the generator is in the form of electricity obtained at terminals 7. About another 30% is dissipated in the form of heat in the motor, this being absorbed by the lubrificating oil heat absorber 2 and by the water cooling circuit 3. About a further 30% is dissipated by the exhaust gasses, this being absorbed by the heat absorber 4 and is then given to said air by heat exchanger 22. The absorbers 2 and 4 are connected with the heat exchanger, which is placed inside the water container 11, thus increasing the water temperature. The remaining 10% of the energy, which could be dispersed, can however still be used. This can be accomplished by passing the feeding air for the heat pump along the generator unit and also along the insulating casing 39. In this manner practically all the energy produced is used, leaving unused only the fuel, which has not undergone complete combustion within the engine.

The electric current necessary for the functioning of the compressor, the pumps, the fans, the control panels, etc. is supplied by the alternator 6. The electricity generated may be used for other purposes such as heating or illumination.

All the heat dissipated within the casing 39 contributes to the increase of the efficiency of the heat pump, allowing, at the same time, functioning when the air temperature is very low, minus 20°C for example.

The water battery 17 limits all the necessary temperature variations of the air stream. The free of charge hot water provided by this battery may be used as sanitary water.

During the in-between seasons water for sanitary purposes is produced as well as providing heating. The whole system does not undergo any variations apart from the fact that water is taken at K, in this manner the container 11 is used only for heating purposes.

This circuit can obviously be obtained from the one in Fig. 1 by simple commuting the appropriate valves.

To obtain the winter cycle the water circuit can undergo further variations, the containers 11 and 13 can be changed by the application of other valves. In this manner, the sanitary water will pass through a heat exchanger 21 contained within the water container. A special probe 23 will provide temperature readings of the T3 air just before the water battery 17. If this temperature nears 0°C and if the flow-meter does not register sanitary water flow, the probe 23 will open the exhaust valve 25 which in turn will guarantee circulation within the water battery, preventing at the same time the water from freezing.

This invention may be used, previously undergoing changes according to Fig. 3, for heating air only and providing at the same time a high rate of exchange of the air itself, e.g. cinemas, discotheques, etc. In this version a heat recuperator is included, which comprises a battery 31 at the air intake (stream T10), that is just in front of the generator unit, this battery being

- 9 -

also connected to the pre-heat battery which receives fresh air Tl.

This air stream Tl passes through the grid 38, the filter 22a the inlet battery 30, the cooler of the heat pump, the hot water battery 32 and finally through the fan 36.

The stream T10 flows through the recuperator 31, which in turn is connected to the battery 30 which pre-heats fresh on-coming air Tl.

This air, upon cooling, becomes stream T6 and feeds the generator unit and doing so it undergoes a temperature increase T2 since it absorbes the heat dissipated by the unit itself. After being heated by exchanger 22 the air is passed through the evaporator 16 and eventually comes out as air stream T5.

If the temperature of the stream T10 sensed by temperatur probe 23 is too high the valve 33 will deviate the hot water from the heating battery 32. The probe 23 will also shut-off the compressor 14, the functioning of the heat pump will thus be terminated. The generator unit, however, will have to function continuously in order to provide electric energy. It will be cooled by the battery 35 placed behind the evaporator. The temperature of the cooling circuit will be controlled in the usual manner.

GIORGIO PAGLIARANI
47037 RIMINI (Forlì)

C L A I M S

1.    A device, for producing heat and electric energy comprising a generator unit (40) and a heat pump (37) which uses external air as heat source, characterized in that the air which cools the unit is used to feed the heat pump (37), being pre-heated by the heat dissipated by said generator unit (40).

2.    A device according to Claim 1, characterized in that the generator unit (40) is of the regenerating type and forsees the regeneration of the heat contained in the exhaust gasses as feeding air for said heat pump (37).

3.    A device according to Claim 2, characterized in that before the evaporator (16) of the heat pump (37), a water battery (17) is placed which helps to diminish the temperature amplitude of the feeding air, increasing or decreasing it according to necessity.

4.    A device according to Claim 1, 2 or 3, characterized in that the compressor (14) has the possibility of starting

- 11 -

while still empty or by stages or in any way so as to decrease the power input at the starting off.

5. A device according to claim 1, 2, 3 or 4, characterized in that the generator unit and the heat pump evaporator (16) are contained inside an insulating casing (39) which has only two openings: one at the engine intake and the other at the outlet behind the evaporator (16).

6. A device according to Claim 5, characterized in that at least some of the electrical and mechanical devices responsible for the dispersion of heat are contained inside the insulating casing (39) thus increasing the efficiency of the system.

FIG.1

# FIG. 2

P2

12

11

15

21

13

<+50°C

<+45°C

23

25

24

+2→+14°C

>+60°C

<+40°C

FIG. 3

T9 · 3/3 · 0070545